# EUROPEAN PATENT SPECIFICATION

(11) **EP 4 423 349 B1**
(45) Date of publication and mention of the grant of the patent: **14.10.2026**
(21) Application number: 22772976.1
(22) Date of filing: 05.09.2022
(51) Int. Cl.: E04D 13/08, E03B 3/02

(54) **LIQUID FLOW DIVERTER**
FLÜSSIGKEITSFLUSSUMLEITER
DÉRIVATION DE DÉBIT DE LIQUIDE

(30) Priority: 26.10.2021 EP 21204811
(43) Date of publication of application: 04.09.2024
(73) Proprietor: Husqvarna AB, 561 82 Huskvarna (SE)
(72) Inventor: KOHL, Peter, 89257 Illertissen (DE)
(74) Representative: Finkele, Rolf
(86) International application number: PCT/EP2022/074635
(87) International publication number: WO 2023/072459

(56) References cited:
- EP-A1- 2 696 007
- DE-A1- 102005 024 300
- DE-A1- 102013 017 979
- DE-U1- 202010 017 811
- GB-A- 2 470 923

## Description

### TECHNICAL FIELD

The present disclosure relates to a liquid collection device. More specifically, the present disclosure relates to the liquid collection device, having a liquid flow diverter, which may allow collection of a liquid from a drainage pipe or a downpipe.

### BACKGROUND

A liquid collection device may be used to collect a liquid (say rainwater) from a drainage pipe or a downpipe. The drainage pipe or the downpipe have generally applications with a building, gardens, and other similar installations. The liquid collection device may collect and communicate the liquid from the downpipe with a liquid reservoir (say a liquid storage tank). Such a liquid collection device may include a liquid flow diverter, which may further include a collection unit and a conduit extending therefrom for connection with the liquid reservoir. The collection unit of the liquid flow diverter may be readily and removably inserted in any downpipe via a drill hole drilled through a wall of the downpipe.

The conventional liquid flow diverter is made up of flexible rubber and poses some limitations during mounting or installation with the downpipe. The collection unit of the flexible rubber liquid flow diverter may not properly or accurately adapt to the wall of the downpipe and may hang in the downpipe at any angle, position, or orientation. The liquid flow diverter may then have a limited, and inadequate capacity to receive and collect the liquid. Thus, the liquid flow diverter may not be utilized to its full capacity and the liquid may not be stored in the liquid reservoir for further usage or application.

An example is provided by GB patent application GB 2470923 A (hereinafter referred to as the '923 reference). The '923 reference discloses a drainage device for draining rainwater from a drainpipe and comprises a conduit having a first end and a second end for channeling the water from the drainpipe. The conduit includes at least one aperture between the first and second ends for receiving the water to be channeled. The device further comprises an anchor having an attaching portion for attaching the anchor to the drainpipe and a coupling portion for coupling to the first end of the conduit. The device also has a clamping device with at least one formation for attaching the clamping device to the pipe and a clamp for clamping the conduit between the first and second ends.

Another example of a liquid collection device is provided in German patent application 10 2013 017 979 A1 (hereinafter referred to as '979 reference). The '979 reference provides a water collection device for collecting water, in particular rainwater, in a downpipe. The water collection device includes a collection unit. The collection unit includes a collection groove made of an elastically deformable material that resets and which may be inserted into the downspout via a lateral insertion opening. The collection unit further includes a drainage socket with a drainage channel made of an elastomeric material. The drainage channel has steep sidewalls which define a channel profile for flow of water. Bottom of the drainage channel incorporates reinforcing webs which provide partial rigidity to the drainage channel. The drainage socket may be connected to the collection groove and may be fixable on the downspout in the region of the insertion opening and via which collected water may drain out of the downspout. Further, the drainage channel has a helix type shape which may be construed as an outward extension of the drainage channel within the downpipe which allows the water collection device to seal with inner surface of the downpipe. The outward extension as such is inherently due to shape of the drainage channel and not provided as a separate part. The '979 reference falls short of providing the collection unit, which may easily and properly adapt to the wall of the downspout. Further, the collection unit may be improperly positioned in the downspout and may not be able to collect the water to its full capacity.

Thus, there is a need of an improved liquid flow diverter which may allow efficient and ergonomic applications with the downpipe.

### SUMMARY

In view of the above, it is an objective of the present invention to solve or at least reduce the drawbacks discussed above. The objective is at least partially achieved by a liquid flow diverter according to claim 1.

Thus, the present disclosure provides a liquid flow diverter that advantageously includes the extension with the downpipe. The extension may provide flexibility feature to the otherwise rigid body and may facilitate good and thorough engagement of the body with the downpipe. The liquid outlet of the liquid flow diverter may be fluidly coupled to a liquid reservoir, even at a remote location, via a hose and the like. Further, the liquid flow diverter due to its material characteristics and improved ergonomics may provide benefits of easy and proper positioning or orientation of the channel profile in the downpipe.

According to an embodiment of the present disclosure, the first material is a partly rigid material. Further, the second material is a partly rigid material. The body being made up of a partly rigid material, and the extension being made up of a partly rigid material allows the extension to snugly fit with the wall of the downpipe and provide a watertight sealing effect. The extension may be made up of a material such as, but not limited to, a rubber, a polymer or the like which may adapt to the shape of the wall of the downpipe. Thus, the channel profile with additional support from the extension may properly adapt to the wall of the downpipe and the liquid collection may be accomplished at full capacity of the channel profile.

According to an embodiment of the present disclosure, the channel profile circumscribes a circumference between its first end and its second end of at least 240 degree.

According to an embodiment of the present disclosure, the liquid outlet of the liquid flow diverter fluidly couples with a drill hole of the downpipe. The liquid outlet may further be fluidly coupled to the liquid reservoir at remote or far-off location via the hose. The liquid via the hose may directly be used for various applications such as irrigation or household activities.

According to an embodiment of the present disclosure, the liquid outlet is a separate part mounted to the first end of the body or is integral to the first end. The liquid outlet of different shape or size may be retrofitted to the first end of the body of the liquid diverter based on implementation or application needs. The removable feature of the liquid outlet may also allow for ease in maintenance of the body as well as the liquid outlet. Alternatively, the liquid outlet may be integrally formed with the body. This may save time and cost associated with the manufacturing.

According to an embodiment of the present disclosure, the extension is one or more of a seal, a compression ring and flexible, water-resistant components. The seal, the compression ring and flexible, water-resistant components such as bristles may provide benefits of adapting the channel profile to the shape of the downpipe and improving the ingress of the liquid in the channel profile.

In one alternative, according to the invention, the body defines a recess or mounting profile, which allows assembly of the extension with the body. The recess or mounting profile may provide secure assembly of the extension with the body of the liquid flow diverter. The recess or mounting profile may also prevent inadvertent fall or disassembly of the extension from the body of the liquid flow diverter.

According to an embodiment of the present disclosure, the body is made of a material selected from one or more of a polymer, a plastic, and the extension is selected from one or more of a polymer. The polymer or plastic material may provide high strength, toughness, or resilience to the body of the liquid flow diverter and the seal. The polymer or plastic material may also provide necessary flexibility for proper insertion of the channel profile of the liquid flow diverter in the downpipe.

According to an embodiment of the present disclosure, the body is made of a rigid hard plastic, and the extension is made of rubber. The channel profile of the liquid flow diverter, made of such rigid hard plastic, may not inadvertently bend in the downpipe during its insertion via the drill hole. Thus, the channel profile may properly or accurately adapt to the wall of the downpipe at an angle, position, or orientation suitable for maximum, efficient, and secure collection of the liquid.

According to an embodiment of the present disclosure, the liquid flow diverter further includes a spout having ribs. The ribs of the spout allow to removably couple the liquid flow diverter with the downpipe. The spout with ribs may be used to properly position or orient the liquid flow diverter with the downpipe. The ribs may be designed such as to ensure proper positioning or orientation of the channel profile in the downpipe when the spout is fixed with the down pipe.

In another alternative, according to the invention, the liquid flow diverter is manufactured through a two-component molding process, wherein the second material of the extension is paired with the first material of the body. Two-component molding process advantageously provides freedom in selecting shape, material, size as well as functional properties of the liquid flow diverter. Through manufacturing via two-component molding, these properties may be appropriately and suitably changed or modified to suit various application areas. The liquid flow diverter may be manufactured as a versatile application product. The extension is appropriately paired with the body from the perspective of material selection, dimensional accuracy, elastic properties etc..

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a liquid flow diverter, in accordance with an aspect of the present disclosure;
**FIG. 2** shows another perspective view of a liquid flow diverter, in accordance with an aspect of the present disclosure;
**FIG. 3A** shows a perspective assembled view of a liquid flow diverter and a compression ring, in accordance with an aspect of the present disclosure;
**FIG. 3B** shows a perspective disassembled view of a liquid flow diverter and a compression ring, in accordance with an aspect of the present disclosure;
**FIGS. 4A, 4B, 4C, 4D** and **4E** show various views for assembly of a liquid flow diverter with a downpipe, in accordance with an aspect of the present disclosure;
**FIGS. 5A, 5B** and **5C** show various views for coupling of a spout with a liquid flow diverter, in accordance with an aspect of the present disclosure;
**FIG. 6** shows an exploded view of a spout with respect to a liquid flow diverter, in accordance with an aspect of the present disclosure;
**FIG. 7** shows a top perspective view of mounting of a liquid flow diverter with a downpipe, in accordance with an aspect of the present disclosure; and
**FIG. 8** shows a perspective view of the mounting of a liquid flow diverter with a downpipe, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

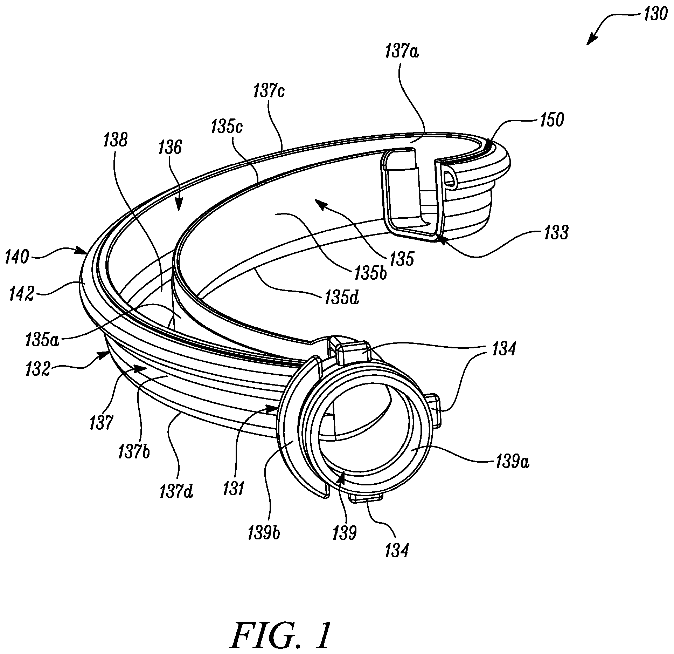

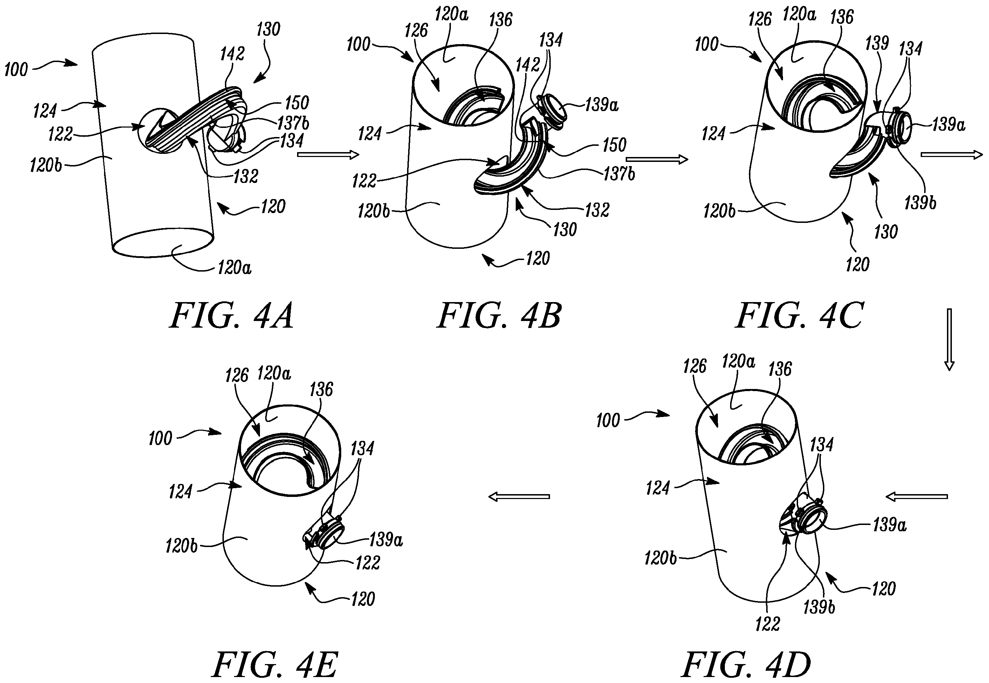

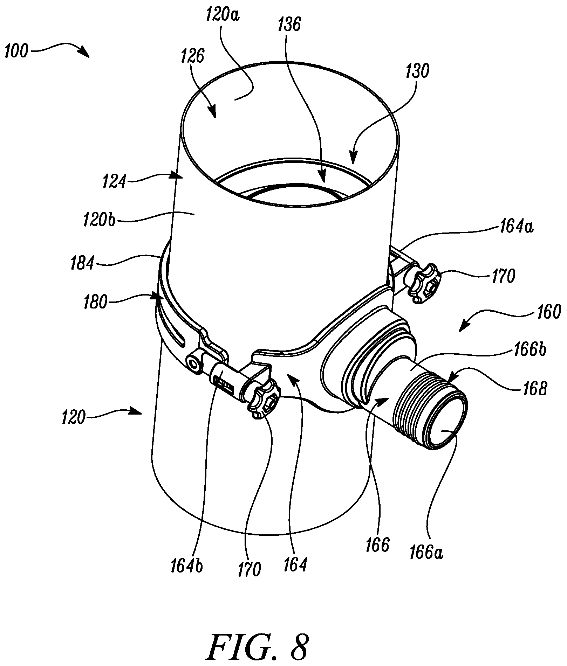

**FIG. 1** illustrates a liquid flow diverter **130** which finds applications with a liquid collection device **100** (best shown in **FIGS. 4E****, 8)** and may allow collection of a liquid from a downpipe **120** (as shown in **FIG. 4A-4D****).** The collected liquid may be transferred to a liquid reservoir (not shown) directly or via a hose (not shown), where the liquid reservoir may be installed at a far off or a remote location. The liquid collection device **100** of the present disclosure include the liquid flow diverter **130** which may have different applications with gardening devices such as the downpipe **120.**

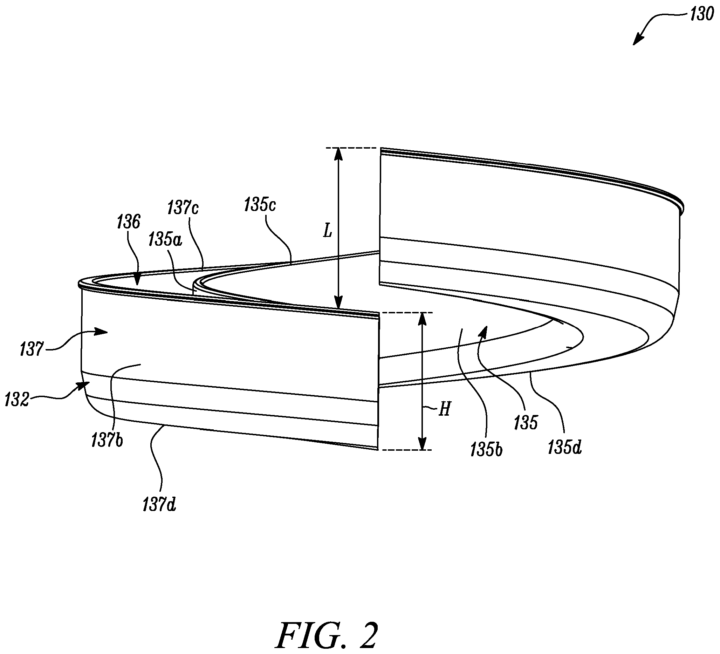

The liquid flow diverter **130** includes a body **132.** The body **132** includes a first end **131,** a channel profile **136** for collecting the liquid and a second end **133.** The channel profile **136** may be positioned between the first end **131** and a second end **133.** The channel profile **136** includes a helix shape and may allow flow of a liquid (say water) therein. The helix shaped channel profile **136** has a lead **"L"** (as shown in **FIG. 2****)** of at least a height **"H"** of the channel profile **136** at its first end **131.** This defined relation between the lead **"L"** and the height **"H"** of the channel profile **136** is necessary to avoid undesired movement of the channel profile **136** in the downpipe **120.** In some embodiments, the channel profile **136** may include a U-shape or any shape other than the helix shape.

The channel profile **136** includes a pair of side walls **135, 137** and a bottom surface **138.** The pair of side walls **135, 137** include inner surfaces **135a, 137a** respectively and opposed outer surfaces **135b, 137b** respectively. Further, the pair of side walls **135, 137** may include top surfaces **135c, 137c** respectively and bottom surfaces **135d, 137d** respectively. The body **132** further includes a liquid outlet **139** associated with the first end **131.** In some embodiments, the liquid outlet **139** is a separate part mounted to the first end **131** of the body **132.** The liquid outlet **139** of different shape or size may be retrofitted to the first end **131** of the body **132** of the liquid diverter **130** based on implementation or application needs. The removable feature of the liquid outlet **139** may also allow for ease in maintenance of the body **132** as well as the liquid outlet **139.** In some embodiments, the liquid outlet **139** is integral to the first end **131.** This may save time and cost associated with the manufacturing. Further, in the illustrated embodiment, the liquid outlet **139** is circular in shape and includes an inner side **139a** and an outer side **139b.** The outer side **139b** includes one or more protrusions **134.** However, in other embodiments, the liquid outlet may be envisioned with different structural features also which should be contemplated well within the scope of the present disclosure.

The body **132** is made from a first material. In some embodiments, the first material may be a partly rigid material. In the context of the present disclosure, the partly rigid material refers to a material which may have at least some part of composition as a rigid material. In an embodiment, the partly rigid material may be a rigid material. The rigid material may be one or more of a polymer or a plastic. The polymer or plastic material may provide high strength, toughness, or resilience to the body **132.** The polymer or plastic material may also provide necessary flexibility for proper insertion of the body **132,** particularly the channel profile **136** in the downpipe **120.** The body **132** may preferably be made from a rigid hard plastic. Thus, channel profile **136** may not inadvertently excessively bend in the downpipe **120** during its insertion and may be positioned correctly or properly in the downpipe **120.**

In another embodiment, the partly rigid material may be a semi-rigid material. The semi-rigid material refers to a material which may have at least some part of composition as a flexible material along with having at least some part of composition as a rigid material. The semi-rigid material may showcase functional properties of both a rigid material and a flexible material and may provide a balance between fully rigid material and a fully flexible material. The present disclosure is not limited by any proportions of material composition for the semi-rigid material.

The body **132** also includes an extension **140** for coupling around the outer surface **137b.** More specifically, the channel profile **136** includes the extension **140** for coupling around the outer side **137b** of the body **132.** Further, the extension **140** is made of a second material. In some embodiments, the second material may be a partly rigid material.

In the context of the present disclosure, the partly rigid material of the extension **140** refers to a material which may have at least some part of composition as a flexible material. In an embodiment, the partly rigid material may be a flexible material. The flexible material may be one or more of a polymer or a plastic. The polymer or plastic material may provide high strength, toughness, or resilience to the extension **140.** The polymer or plastic material may also provide necessary flexibility for proper sealing of the extension **140** with the downpipe **120.** The extension **140** may preferably be made from a rubber, a polymer or the like. Thus, extension **140** may provide adequate flexibility to adapt inside the downpipe 120 and provide a watertight sealing accordingly.

In another embodiment, the partly rigid material of the extension **140** may be a semi-rigid material. The semi-rigid material refers to a material which may have at least some part of composition as a flexible material along with having at least some part of composition as a rigid material. The semi-rigid material may showcase functional properties of both a rigid material and a flexible material and may provide a balance between fully rigid material and a fully flexible material. The present disclosure is not limited by any proportions of material composition for the semi-rigid material.

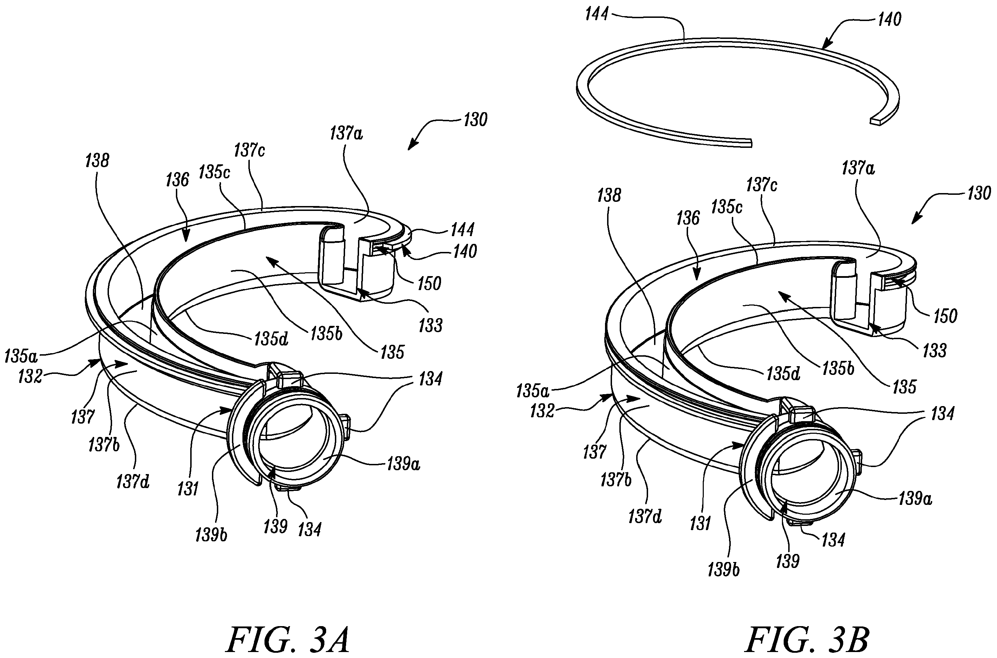

The extension **140** may add flexibility feature to the otherwise rigid body **132** and may facilitate good and thorough engagement of the body **132** with the downpipe **120.** The extension **140** is one or more of a seal **142,** a compression ring **144** (as shown in **FIGS. 3A** and **3B****)** and flexible, water-resistant components (not shown). The seal **142,** the compression ring **144** and flexible, water-resistant components such as bristles may provide benefits of adapting the channel profile **136** to the shape of the downpipe **120** and improving the ingress of the liquid in the channel profile **136.** In some embodiments, the extension **140** may be made from one or more of a polymer or a rubber. The extension **140** of the present disclosure includes a circular cross-section. However, actual implementation of the present disclosure may have any type, number, dimensions, shape, or cross-section of the extension **140.**

Further, the extension **140** is the part of the liquid flow diverter **130** which comes in direct contact with an inner wall **120a** of the downpipe **120.** Therefore, the extension **140** should be provided in such a way that the extension **140** creates a fluid-tight sealing between the inner wall **120a** of the downpipe **120** and the liquid flow diverter **130** so that none of the liquid escapes the liquid flow diverter **130** and is diverted towards the channel profile **136** for further usage and applications. Thus, the extension **140** is appropriately provided with suitable material properties, adaptable shape and flexibility to be able to fulfill the required functionality therein.

**FIGS. 4A, 4B, 4C, 4D** and **4E** illustrate the various stages of assembly of the liquid flow diverter **130** in the downpipe **120.** The liquid flow diverter **130** may be readily and removably inserted in the downpipe **120** via a drill hole **122** thereof. The insertion may be continued until the channel profile **136** is fully inside the downpipe **120** and the one or more protrusions **134** of the liquid outlet **139** abuts a portion of an outer wall **120b** of the downpipe **120** around the drill hole **122.** Once the channel profile **136** is inserted in the downpipe **120** as illustrated in **FIGS. 4A** to **4C****,** the liquid flow diverter **130** may be partially rotated such as to bring the channel profile **136** in the proper orientation to receive the liquid in the downpipe **120** as illustrated in **FIGS. 4D** to **4E****.** Further, once the channel profile **136** is in the proper orientation, the extension **140** may fully engage with the inner wall **120a** of the downpipe **120.** The extension **140** may facilitate secure mounting or engagement of the channel profile **136** of the liquid flow diverter **130** with the inner wall **120a** of the downpipe **120.**

In some embodiments, the extension **140** may be removably mounted or assembled with the body **132** (or the channel profile **136)** of the liquid flow diverter **130.** The assembly of the extension **140** may be allowed by a recess or mounting profile **150** defined in the outer surface **137b** of the side wall **137** of the channel profile **136.** The recess **150** may provide secure assembly of the extension **140** with the body **132** of the liquid flow diverter **130.** The recess **150** may further prevent inadvertent fall or disassembly of the extension **140** from the body **132** of the liquid flow diverter **130.** The recess **150** may have dimensions such as to facilitate friction or snap fit of the extension **140** therein. The extension **140** may also be engaged with the recess **150** using a glue or other fastening means known in the art. In some embodiments, the extension **140** may be 1-2 mm below the top surface **137c** of the body **132** as per requirement. In some embodiments, the extension **140** may be around the top surface **137c** of the body **132.**

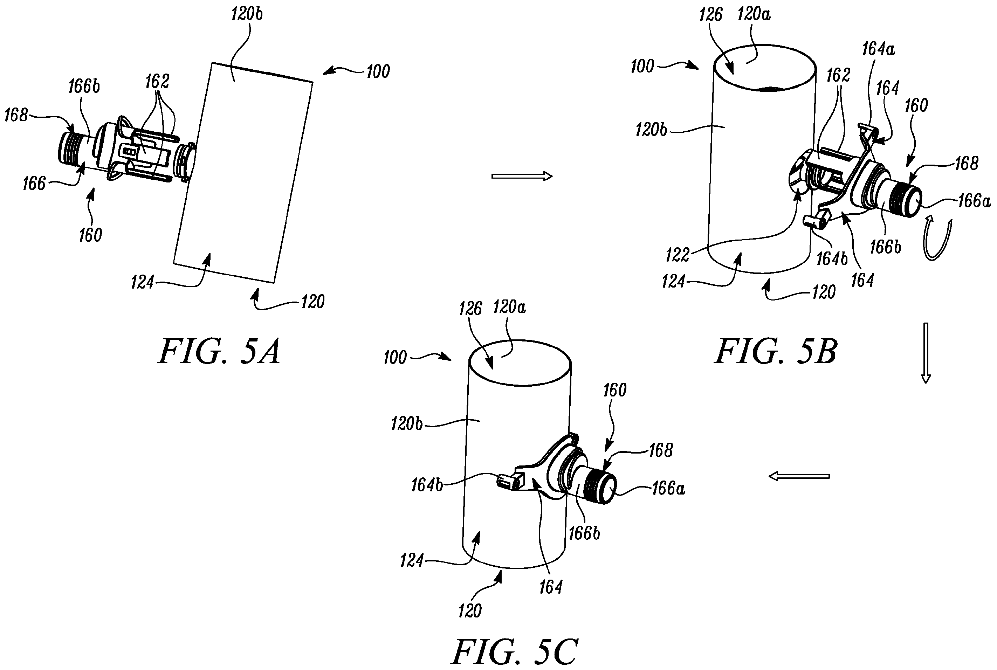

**FIGS. 5A, 5B** and **5C** illustrate the liquid collection device **100** having the downpipe **120** mounted with the liquid flow diverter **130.** The liquid flow diverter **130,** or the liquid collection device **100** further includes a spout **160.** The spout **160** may include a pair of arms **164,** ribs **162,** and a pipe **166.** The pipe **166** may include an inner surface **166a** and an outer surface **166b**. The outer surface **166b** may include a series of circular protrusions **168.** The ribs **162** of the spout **160** may allow to removably couple the liquid flow diverter **130** with the downpipe **120.** The ribs **162** may be designed such as to ensure proper positioning or orientation of the channel profile **136** of the liquid flow diverter **130** in the downpipe **120** when the spout **160** is fixed with the down pipe **120.** The present disclosure includes three ribs **162.** However, actual implementation of the present disclosure may have any type, number, dimensions, or shape of the ribs **162.**

The ribs **162** may engage with the outer side **139b** of the liquid outlet **139,** such as by snap fit, press fit or by any means known in the art. The spout **160** with the ribs **162** may then be partially rotated and pushed towards the downpipe **120** such as to allow a fluid communication between the liquid outlet **139** and the pipe **166.** Subsequently, the liquid flow diverter **130** may properly position or orient with the downpipe **120.** Thus, the liquid flow diverter **130** or particularly the channel profile **136** may properly or accurately adapt to the inner wall **120a** of the downpipe **120** at an angle, position, or orientation suitable for maximum possible collection of the liquid. Further, the liquid outlet **139** of the liquid flow diverter **130** may fluidly couple with the drill hole **122** of the downpipe **120.**

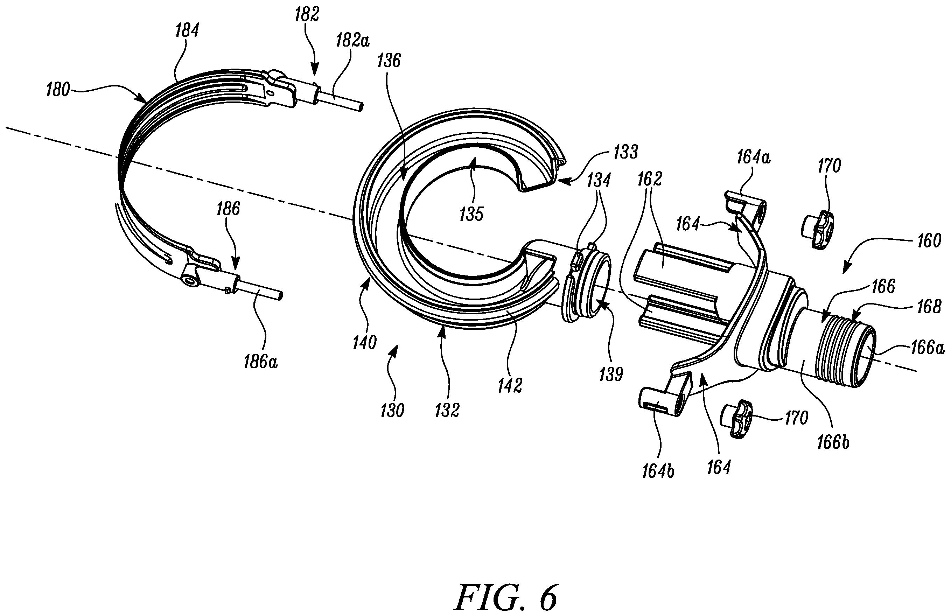

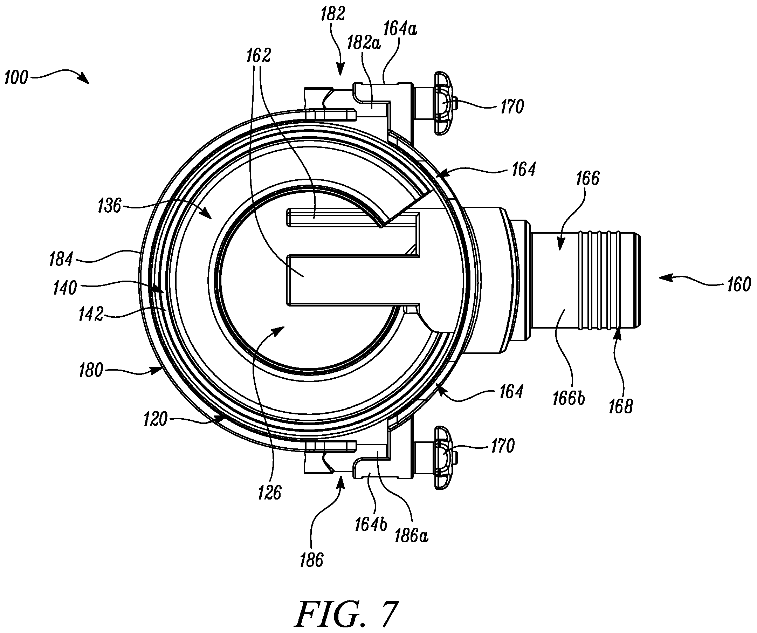

In some embodiments, to mount the spout **160** and the liquid flow diverter **130** assembly with the downpipe **120,** a belt **180** may be provided. The belt **180** (as shown in **FIG. 6****)** may include a first end **182,** a body **184** and a second end **186.** The body **184** may adapt to the shape of the outer wall **120b** of the downpipe **120** and may consequently wrap around it. The first end **182** and the second end **186** may respectively include engaging elements **182a** and **186a**. The engaging elements **182a** and **186a** may respectively pass and extend through fingers **164a** and **164b** of the pair of arms **164** of the spout **160.** The engaging elements **182a** and **186a** may then be respectively fastened to the fingers **164a** and **164b** using a pair of caps **170.** Further, the spout **160** and the liquid flow diverter **130** may be securely installed with the downpipe **120** using the belt **180** to provide the liquid collection device **100** as illustrated in **FIGS. 7** and **8****.**

During implementation, on installation or mounting of the liquid flow diverter **130** with the downpipe **120,** the liquid (say rainwater) may fall in the downpipe **120.** A portion of the falling liquid may be collected in the helix shaped channel profile **136** of the liquid flow diverter **130** while the remaining liquid may flow through a hollow space **126** in the downpipe **120.** The collected liquid may be supplied to an external water reservoir (say a water tank) via the pipe **166** in fluid communication with the liquid outlet **139.**

In some embodiments, the outer surface **166b** of the pipe **166** may be coupled with a liquid dispenser or even atap (not shown). The coupling may take place by engagement of the tap with the series of circular protrusions **168.** In some embodiments, the outer surface **166b** of the pipe **166** may be coupled with a hose (not shown). The coupling may take place by engagement of the hose with the series of circular protrusions **168.** The liquid via hose may then be supplied to any liquid reservoir installed nearby or at any remote location.

In some embodiments, a housing (not shown) may be rotatably connected to the outer surface **166b** of the pipe **166.** The coupling may take place by engagement of the housing with the series of circular protrusions **168.** The housing may include two pipe sockets and a metering unit. The liquid from the pipe **166** may flow through the metering unit. The metering unit may then regulate (automatically or based on user-input) the quantity or flow of the liquid to the liquid reservoir via one of the pipe sockets. The other pipe socket may be used for connection with a liquid source such as a fresh water tap in absence of any liquid naturally falling in the downpipe **120.**

In some embodiments, the outer surface **166b** of the pipe **166** may be coupled with a pump (not shown). The pump may ease the transport of the liquid from the liquid flow diverter **130** to the liquid reservoir placed installed at the remote location via the hose. The liquid via the hose may directly be used for various applications such as irrigation or household activities.

Thus, the present disclosure provides the liquid flow diverter **130** with the helix shaped channel profile **136.** Due to the helix shape of the channel profile **136,** the liquid therein may flow under the influence of gravity towards the liquid outlet **139** of the liquid flow diverter **130.** The extension **140** may add flexibility feature to the otherwise rigid body **132** and may facilitate good and thorough engagement of the body **132** with the downpipe **120.** The liquid outlet **139** of the liquid flow diverter **130** may be fluidly coupled to the liquid reservoir at the far off or the remote location via the hose. Further, the liquid flow diverter **130** due to its material characteristics and the extension **140,** may provide benefits of easy and proper positioning or orientation of the channel profile **136** in the downpipe **120.** Thus, the channel profile **136,** with adept support from the extension **140,** may properly adapt to the wall **124** of the downpipe **120** and the liquid collection may be accomplished at full capacity of the channel profile **136.**

According to another embodiment of the present invention, the liquid flow diverter **130** is manufactured through a two-component molding process. More specifically, the liquid flow diverter **130** may be manufactured through a bi-injection molding process. In this process, more than one material is fed into a mold cavity at different times, through different gates of the mold. The different materials begin to harden before a meeting point inside a cavity within the mold, which thereafter results in a layered effect. In this process, materials are not expected to physically mix with each other, rather the injection speed of the materials in the mold, meeting point, and material selection subsequently determines final appearance, function and finish of the component being manufactured.

With context of the present invention, the body **132** includes the extension **140** for sealing with the downpipe **120,** whereas the prior art includes a main body with an integrally formed extended portion on the top of the main body such that the extended portion functions as a sealing with respect to a downpipe. The body **132** of the present disclosure is manufactured from the first material and the extension **140** is manufactured from the second material whereas the above-mentioned main body of the prior art with its extended portion is manufactured from solely one material.

The two-component molding process according to the present invention may advantageously provide freedom in selecting shape, material, size as well as functional properties of the liquid flow diverter **130.** Through manufacturing via two-component molding, these properties may be appropriately and suitably changed or modified to suit various application areas. The liquid flow diverter **130** may be manufactured as a versatile application product. Further, the second material of the extension **140** may also be appropriately paired with the first material of the body **132** from the perspective of material selection, dimensional accuracy, elastic properties etc. to better suit the need of a particular application area.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Liquid Collection Device
- **120**: Downpipe
- **120a**: Inner Wall
- **120b**: Outer Wall
- **122**: Drill Hole
- **124**: Wall
- **126**: Hollow Space
- **130**: Liquid Flow Diverter
- **131**: First End
- **132**: Body
- **133**: Second End
- **134**: Protrusions
- **135**: Side Wall
- **135a**: Inner Surface
- **135b**: Outer Surface
- **135c**: Top Surface
- **135d**: Bottom Surface
- **136**: Channel Profile
- **137**: Side Wall
- **137a**: Inner Surface
- **137b**: Outer Surface
- **137c**: Top Surface
- **137d**: Bottom Surface
- **138**: Bottom Surface
- **139**: Liquid Outlet
- **139a**: Inner Side
- **139b**: Outer Side
- **140**: Extension
- **142**: Seal
- **144**: Compression Ring
- **150**: Recess/Mounting Profile
- **160**: Spout
- **162**: Ribs
- **164**: Arms
- **164a**: Finger
- **164b**: Finger
- **166**: Pipe
- **166a**: Inner Surface
- **166b**: Outer Surface
- **168**: Protrusions
- **170**: Cap
- **180**: Belt
- **182**: First End
- **182a**: Engaging Element
- **184**: Body
- **186**: Second End
- **186a**: Engaging Element
- **L**: Lead
- **H**: Height

## Claims

1. A liquid flow diverter **(130)** for a downpipe **(120),** comprising:
a body **(132)** including a channel profile **(136)** between a first end **(131)** and a second end **(133),**
wherein the channel profile **(136)** has a helix shape and allows flow of a liquid therein;
wherein the channel profile **(136)** includes a pair of side walls **(135, 137)** and a bottom surface **(138),**
wherein the pair of side walls **(135, 137)** includes inner surfaces **(135a, 137a)** respectively and opposed outer surfaces **(135b, 137b)** respectively,
a liquid outlet **(139)** associated with the first end **(131)** of the body **(132),**
wherein the liquid outlet **(139)** allows fluid communication of the liquid flow diverter **(130)** with the outside of the downpipe **(120),**
the body **(132)** is made of a first material, with the channel profile **(136)** having a lead **(L)** of at least a height **(H)** of the channel profile **(136)** at its first end **(131);**
and wherein the channel profile **(136)** includes an extension **(140)** for coupling around an outer side **(137b)** of the body **(132),** wherein the extension **(140)** is made of a second material,
**characterized in that:**
the body **(132)** either defines a recess or a mounting profile **(150),** which allows assembly of the extension **(140)** with the body **(132),** or
the liquid flow diverter **(130)** is manufactured through a two-component molding process, wherein the second material of the extension **(140)** is paired with the first material of the body **(132).**

2. The liquid flow diverter **(130)** of claim 1, wherein the first material is a partly rigid material.

3. The liquid flow diverter **(130)** of claim 1, wherein the second material is a partly rigid material.

4. The liquid flow diverter **(130)** of any of the preceding claims, wherein the channel profile **(136)** circumscribes a circumference between its first end **(131)** and its second end **(131)** of at least 240 degrees.

5. The liquid flow diverter **(130)** of any of the preceding claims, wherein the liquid outlet **(139)** is a separate part mounted to the first end **(131)** of the body **(132)** or is integral to the first end **(131).**

6. The liquid flow diverter **(130)** of any of the preceding claims, wherein the extension **(140)** is one or more of a seal **(142),** a compression ring **(144)** and flexible, water-resistant components.

7. The liquid flow diverter **(130)** of any of the preceding claims, wherein the body **(132)** is made of a material selected from one or more of a polymer, a plastic, and the extension **(140)** is made of a polymer.

8. The liquid flow diverter **(130)** of claim 7, wherein the body **(132)** is made of a rigid hard plastic, and the extension **(140)** is made of rubber.

9. The liquid flow diverter **(130)** of any of the preceding claims, wherein the liquid flow diverter **(130)** further includes a spout **(160)** having ribs **(162),** wherein the ribs **(162)** of the spout **(160)** allow to removably couple the liquid flow diverter **(130)** with the downpipe **(120).**

## Patentansprüche

1. Flüssigkeitsflussumleiter **(130)** für ein Fallrohr **(120),** umfassend:
einen Körper **(132)**, der ein Kanalprofil **(136)** zwischen einem ersten Ende **(131)** und einem zweiten Ende **(133)** einschließt,
wobei das Kanalprofil **(136)** eine Helixform aufweist und einen Fluss einer Flüssigkeit darin ermöglicht;
wobei das Kanalprofil **(136)** ein Paar Seitenwände **(135, 137)** und eine Bodenoberfläche **(138)** einschließt,
wobei das Paar Seitenwände **(135, 137)** jeweils innere Oberflächen **(135a, 137a)** und jeweils gegenüberliegende äußere Oberflächen **(135b, 137b)** einschließt,
einen Flüssigkeitsauslass **(139)**, der mit dem ersten Ende **(131)** des Körpers **(132)** verknüpft ist,
wobei der Flüssigkeitsauslass **(139)** eine Fluidverbindung des Flüssigkeitsflussumleiters **(130)** mit der Außenseite des Fallrohrs **(120),** ermöglicht,
der Körper **(132)** aus einem ersten Material hergestellt ist, wobei das Kanalprofil **(136)** einen Vorsprung **(L)** von mindestens einer Höhe **(H)** des Kanalprofils **(136)** an seinem ersten Ende **(131)** aufweist;
und wobei das Kanalprofil **(136)** eine Verlängerung **(140)** zum Anbringen um eine äußere Seite **(137b)** des Körpers **(132)** herum einschließt, wobei die Verlängerung **(140)** aus einem zweiten Material hergestellt ist,
**dadurch gekennzeichnet, dass**:
der Körper **(132)** entweder eine Aussparung oder ein Montierprofil **(150)** definiert, das einen Zusammenbau der Verlängerung **(140)** mit dem Körper **(132)** ermöglicht, oder
der Flüssigkeitsflussumleiter **(130)** durch ein Zweikomponenten-Spritzgussverfahren gefertigt ist, wobei das zweite Material der Verlängerung **(140)** mit dem ersten Material des Körpers **(132)** gepaart ist.

2. Flüssigkeitsflussumleiter **(130)** nach Anspruch 1, wobei das erste Material ein teilweise starres Material ist.

3. Flüssigkeitsflussumleiter **(130)** nach Anspruch 1, wobei das zweite Material ein teilweise starres Material ist.

4. Flüssigkeitsflussumleiter **(130)** nach einem der vorstehenden Ansprüche, wobei das Kanalprofil **(136)** einen Umfang zwischen seinem ersten Ende **(131)** und seinem zweiten Ende **(131)** von mindestens 240 Grad umschreibt.

5. Flüssigkeitsflussumleiter **(130)** nach einem der vorstehenden Ansprüche, wobei der Flüssigkeitsauslass **(139)** ein separates Teil ist, das an dem ersten Ende **(131)** des Körpers **(132)** montiert ist oder integral mit dem ersten Ende **(131)** ist.

6. Flüssigkeitsflussumleiter **(130)** nach einem der vorstehenden Ansprüche, wobei die Verlängerung **(140)** eines oder mehrere von einer Dichtung **(142)**, einem Kompressionsring **(144)** und flexiblen, wasserfesten Komponenten ist.

7. Flüssigkeitsflussumleiter **(130)** nach einem der vorstehenden Ansprüche, wobei der Körper **(132)** aus einem Material hergestellt ist, das aus einem oder mehreren von einem Polymer, einem Kunststoff ausgewählt ist, und die Verlängerung **(140)** aus einem Polymer hergestellt ist.

8. Flüssigkeitsflussumleiter **(130)** nach Anspruch 7, wobei der Körper **(132)** aus einem starren Hartkunststoff hergestellt ist, und die Verlängerung **(140)** aus Gummi hergestellt ist.

9. Flüssigkeitsflussumleiter **(130)** nach einem der vorstehenden Ansprüche, wobei der Flüssigkeitsflussumleiter **(130)** ferner einen Auslauf **(160)** einschließt, der Rippen **(162)** aufweist, wobei die Rippen **(162)** des Auslaufs **(160)** eine lösbare Anbringung des Flüssigkeitsflussumleiters **(130)** mit dem Fallrohr **(120)** ermöglichen.

## Revendications

1. Déflecteur de flux de liquide **(130)** pour un tuyau de descente **(120),** comprenant :
un corps **(132)** comportant un profil de canal **(136)** entre une première extrémité **(131)** et une seconde extrémité **(133),**
dans lequel le profil de canal **(136)** a une forme d'hélice et permet l'écoulement d'un liquide dans celui-ci ;
dans lequel le profil de canal **(136)** comporte une paire de parois latérales **(135, 137)** et une surface inférieure **(138),**
dans lequel la paire de parois latérales **(135, 137)** comporte des surfaces intérieures **(135a, 137a)** respectivement et des surfaces extérieures **(135b, 137b)** opposées respectivement,
une sortie de liquide **(139)** associée à la première extrémité **(131)** du corps **(132),**
dans lequel la sortie de liquide **(139)** permet une communication fluidique du déflecteur de flux de liquide **(130)** avec l'extérieur du tuyau de descente **(120),**
le corps **(132)** est constitué d'un premier matériau, le profil de canal **(136)** ayant un conducteur **(L)** d'au moins une hauteur **(H)** du profil de canal **(136)** au niveau de sa première extrémité **(131)** ;
et dans lequel le profil de canal **(136)** comporte une extension **(140)** pour un accouplement autour d'un côté extérieur **(137b)** du corps **(132),** dans lequel l'extension **(140)** est constituée d'un second matériau,
**caractérisé en ce que** :
le corps **(132)** définit soit une cavité, soit un profil de montage **(150)** qui permet l'assemblage de l'extension **(140)** avec le corps **(132)**, ou
le déflecteur de flux de liquide **(130)** est fabriqué par un procédé de moulage à deux composants, dans lequel le second matériau de l'extension **(140)** est associé au premier matériau du corps **(132).**

2. Déflecteur de flux de liquide **(130)** selon la revendication 1, dans lequel le premier matériau est un matériau partiellement rigide.

3. Déflecteur de flux de liquide **(130)** selon la revendication 1, dans lequel le second matériau est un matériau partiellement rigide.

4. Déflecteur de flux de liquide **(130)** selon l'une quelconque des revendications précédentes, dans lequel le profil de canal **(136)** délimite une circonférence entre sa première extrémité **(131)** et sa seconde extrémité **(131)** d'au moins 240 degrés.

5. Déflecteur de flux de liquide **(130)** selon l'une quelconque des revendications précédentes, dans lequel la sortie de liquide **(139)** est une pièce séparée montée à la première extrémité **(131)** du corps **(132)** ou fait partie intégrante de la première extrémité **(131)**.

6. Déflecteur de flux de liquide **(130)** selon l'une quelconque des revendications précédentes, dans lequel l'extension **(140)** est un ou plusieurs éléments parmi un joint **(142)**, un anneau de compression **(144)** et des composants flexibles et résistants à l'eau.

7. Déflecteur de flux de liquide **(130)** selon l'une quelconque des revendications précédentes, dans lequel le corps **(132)** est constitué d'un matériau choisi parmi un ou plusieurs parmi un polymère, un plastique, et l'extension **(140)** est constituée d'un polymère.

8. Déflecteur de flux de liquide **(130)** selon la revendication 7, dans lequel le corps **(132)** est constitué de plastique dur et rigide, et l'extension **(140)** est constituée de caoutchouc.

9. Déflecteur de flux de liquide **(130)** selon l'une quelconque des revendications précédentes, dans lequel le déflecteur de flux de liquide **(130)** comporte en outre un bec **(160)** ayant des nervures **(162),** dans lequel les nervures **(162)** du bec **(160)** permettent d'accoupler de manière amovible le déflecteur de flux de liquide **(130)** avec le tuyau de descente **(120)**.
